# DEMANDE DE BREVET EUROPEEN

(11) **EP 0 545 834 A1**
(43) Date de publication de la demande: **09.06.1993**
(21) Numéro de dépôt: 92420444.9
(22) Date de dépôt: 02.12.1992
(51) Int. Cl.: A01N 51/00, A01N 43/653

(54) **Association agrochimique mixte**

(30) Priorité: 06.12.1991 FR 9115397
(71) Demandeur: RHONE-POULENC AGROCHIMIE, 69009 Lyon (FR)
(72) Inventeur: Caruhel, Pascal, F-69330 Meyzieu (FR); Mugnier, Jacques, F-74330 La Balme de Sillingy (FR)
(74) Mandataire: Chrétien, François

(57) **Abrégé**

Association agrochimique.

Elle comprend une quantité efficace d'un benzylidène azolylméthylcycloalcane fongicide et une quantité efficace d'imidacloprid insecticide.

Applicable à la protection des plantes contre les maladies et insectes.

## Description

La présente invention concerne de nouvelles associations agrochimiques pour la protection des plantes comprenant à la fois une matière active fongicide et une matière active insecticide ainsi qu' un procédé de traitement des plantes à l'aide de ces associations.

Au sens de l'invention on entend par "plante" une plante entière, une partie de plante ou le matériel de propagation de la plante, notamment la semence.

Plus particulièrement l'invention a pour objet une association agrochimique pour la protection des plantes contre les maladies et les insectes phytophages, caractérisée en ce qu'elle comprend au moins une quantité efficace d'un benzylidène azolylméthylcycloalcane fongicide et au moins une quantité efficace d'imidacloprid insecticide.

Comme benzylidène azolylméthylcycloalcane fongicide,on peut citer en particulier ceux décrits dans la demande de brevet européen 0 378 953, et de préférence le 2-(4-chlorobenzylidène)5,5 diméthyl 1-(1H-1,2,4-triazol-1-ylméthyl)1-cyclopentanol ou triticonazole et le 2-(4-chlorobenzylidène) 1-(1H-1,2,4-triazol-1-ylméthyl)-1-cyclohexanol.

L'imidacloprid est le nom commun pour le 1-(6-chloro-3-pyridylméthyl)-N-nitro-imidazolidin-2-ylidèneamine décrit pour ses propriétés insecticides notamment dans les compte rendus "Pests and diseases" Brighton Crop Protection Conference de 1990, p.21.

Il a été trouvé que des associations à base de ces deux types de produits sont particulièrement intéressantes pour la protection des plantes contre les maladies et les insectes phytophages.

De manière préférée les associations selon l'invention sont utilisables pour la protection des semences ou en traitement de sol.

De préférence , le fongicide est utilisé à une dose allant de 2,5 à 250 g par quintal et l'insecticide est utilisé à une dose allant de 25 à 2000g par quintal de semences.

L'invention a encore pour objet des compositions à base de chacune des deux matières actives.

L'invention comprend en outre un procédé de traitement des plantes pour la protection des plantes contre les maladies et les insectes phytophages, caractérisé en ce qu'on applique une association des deux matières actives soit simultanémént soit successivement de manière à avoir l'effet conjugué.

Les exemples suivants sont donnés pour illustrer les associations, compositions et traitement selon l'invention.

### EXEMPLE

Des graines de blé de la variété Talent ont été traités avec:
- d'une part le triticonazole seul ,aux doses de 60, 120,et 180g de matière active par quintal (g.m.a./q),
- d'autre part l'imidacloprid seul, aux doses de 200 et 400 g(g.m.a./q),
- enfin des mélanges triticonazole+imidacloprid chaque matière active étant respectivement à chacune des doses indiquées ci-dessus.

On prépare une suspension aqueuse à 200g/l de triticonazole , et contenant :
- solution aqueuse à 40% de tristyryl phénol ethoxylé sous forme de phosphate de potassium (dispersant) 30 g
- nonylphénol oxyéthylé à 10 moles d'oxyde d'éthylène (mouillant) 10g
- popylène glycol 50g
- polysaccharide (Rhodopol 23) 3g
- 1,2 benzisothiazolin-3one (biocide) 1,5g
- silicone antimousse 3g
- eau q.s.p. 1000ml

On utilise une composition d'imidacloprid sous forme d'une formulation commerciale d'une suspension aqueuse à 70% de matière active, vendue sous la marque GAUCHO par la Société Bayer.

Les deux compositions sont appliquées sur les graines par traitement dans un appareil "bol HEGE" pendant 30 secondes.

Les graines sont semées, dans un substrat tourbe-pouzzolane(1:1) contenu dans des pots de 10cm x 10cm, à raison de 10 graines par pot (il y a 4 pots par répétition).

Des graines non traitées ont été semées dans les mêmes conditions.

Au bout de 4 semaines après le semis, les plantules sont inoculées avec une suspension de spores de Puccinia recondita et infestées avec une population d'Aphis sp

Au bout de deux semaines après la contamination, on effectue le contrôle visuel de l'activité, à la fois contre Puccinia recondita et Aphis sp., en comparaison avec les plantes témoins, qui portent plus de 100 Aphis par plante et plus de 50 pustules de rouille par feuille.

Les résultats observés sont consignés dans le tableau ci-dessous:

| Matières actives g.m.a./Q | % efficacité sur Puccinia recondita | % efficacité sur Aphis sp |
|---|---|---|
| Triticonazole | | |
| 60 | 90 | 0 |
| 120 | 100 | 0 |
| 180 | 100 | 0 |
| Imidacloprid | | |
| 200 | 0 | plus de 90% |
| 400 | 0 | plus de 90% |
| Triticonazole + Imidacloprid | | |
| 60 + 200 1 | 90 | plus de 90% |
| 60 + 400 2 | 90 | plus de 90% |
| 120 + 200 3 | 100 | plus de 90% |
| 120 + 400 4 | 100 | plus de 90% |
| 180 + 200 5 | 100 | plus de 90% |
| 180 + 400 6 | 100 | plus de 90% |

Par ailleurs aucun phénomène de phytotoxicité n'a été observé.

Ces résultats montrent clairement que l'association des deux matières permet de contrôler efficacement à la fois la maladie de la rouille brune du blé dûe à Puccinia recondita et l'infestation par un insecte Aphis sp.

Bien entendu cet exemple n'est pas limitatif et bien d'autres maladies et infestations par les insectes peuvent être traitées par les associations et compositions selon l'invention.

Cet exemple illustre bien l'intérêt que présentent les associations selon l'invention.
à savoir de pouvoir combiner dans un même traitement, de préférence un traitement de semence, l'excellente activité des deux matières actives, l'une insecticide, l'autre fongicide, et ceci sans interférence néfaste.

Pour leur emploi dans la pratique, les associations selon l'invention peuvent être utilisées en utilisant des compositions contenant l'une ou l'autre des matières actives ou encore les deux ensemble. Dans chaque composition , les matières actives sont habituellemnt associées à un support,solide ou liquide,utilisable en agriculture et éventuellement au moins un agent tensio-actif.

Pour leur emploi pratique, les constituants de l'association selon l'invention sont rarement utilisés seuls. Le plus souvent ils font partie de compositions. Ces compositions, utilisables pour la protection des végétaux contre les maladies fongiques, et/ou contre les insectes phytophages ou dans les compositions régulatrices de la croissance des plantes, contiennent comme matière active au moins un des constituants de l'association selon l'invention tel que décrit précédemment en combinaison avec les supports solides ou liquides, acceptables en agriculture et/ou les agents tensio-actifs également acceptables en agriculture. En particulier sont utilisables les supports inertes et usuels et les agents tensio-actifs usuels.

Ces compositions contiennent habituellement entre 0,5 et 95% de l'association selon l'invention.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est généralement indispensable lorsque la matière active et/ou le support inerte ne sont pas solubles dans l'eau et que l'agent vecteur de l'application est l'eau.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... ainsi que d'autres matières actives connues à propriétés pesticides (notamment insecticides ou fongicides) ou à propriétés favorisant la croissance des plantes (notamment des engrais) ou à propriétés régulatrices de la croissance des plantes. Plus généralement les composés selon l'invention peuvent être associésà tous les additifs solides ou liquides correspondant aux techniques habituelles de la mise en formulation.

Pour leur application, les constituants de l'association se trouvent donc souvent sous forme de compositions,qui sont elles-mêmes sous des formes assez diverses, solides ou liquides.

Comme formes de compositions solides, on peut citer les poudres pour poudrage ou dispersion (à teneur en association selon l'invention pouvant aller jusqu'à 100 %) et les granulés, notamment ceux obtenus par extrusion, par compactage, par imprégnation d'un support granulé, par granulation à partir d'une poudre (la teneur en association selon l'invention dans ces granulés étant entre 1 et 80 % pour ces derniers cas).

Selon un exemple de composition de granulés, on utilise les constituants suivants :

### Exemple G

- association n°3 50 g
- épichlorhydrine 2,5 g
- éther de cétyle et de polyglycol 2,5 g
- polyéthylène glycol 35 g
- kaolin (granulométrie : 0,3 à 0,8 mm) 910 g

Dans ce cas particulier on mélange les matières actives avec l'épichlorhydrine et on dissout avec 60 g d'acétone ; on ajoute alors le polyéthylène glycol et l'éther de cétyle et de polyglycol. On arrose le kaolin avec la solution obtenue et on évapore ensuite l'acétone sous vide. On utilise avantageusement un tel microgranulé pour lutter contre les champignons du sol.

Les composés de formule (I) peuvent encore être utilisés sous forme de poudre pour poudrage ; on peut aussi utliliser une compostion comprenant 50 g de matière active et 950 g de talc ; on peut aussi utiliser une composition comprenant 20 g de matière active, 10 g de silice finement divisée et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes.

Les concentrés émulsionnables ou solubles comprennent le plus souvent 10 à 80 % de matière active, les émulsions ou solutions prêtes à l'application contenant, quant à elles, 0,01 à 20 % de matière active.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précedemment cités.

A titre d'exemple, voici la composition de quelques concentrés :

### Exemple CE 1

- association 1 400 g/l
- dodécylbenzène sulfonate alcalin 24 g/l
- nonylphénol oxyéthylé à 10 molécules d'oxyde d'éthylène 16 g/l
- cyclohexanone 200 g/l
- solvant aromatique q.s.p 1 litre

Selon une autre formule de concentré émulsionnable, on utilise :

### Exemple CE 2 :

- association 2 250 g
- huile végétale époxydée 25 g
- mélange de sulfonate d'alcoylaryle et d'éther de polyglycol et d'alcools gras 100 g
- diméthylformamide 50 g
- xylène 575 g

A partir de ces concentrés, on peut obtenir par dilution avec de l'eau des émulsions de toute concentration désirée, qui conviennent particulièrement à l'application sur les feuilles.

Les suspensions concentrées, également applicables en pulvérisation, sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des agents de pénétration, des adhésifs, ou des agents antimottants, colorants, etc...

A titre d'exemple, voici diverses compositions de poudres mouillables :

### Exemple PM 1:

- association n°3 50 %
- lignosulfonate de calcium (défloculant) 5 %
- isopropylnaphtalène sulfonate (agent mouillant anionique) 1 %
- silice antimottante 5 %
- kaolin (charge) 39 %

Une autre composition de poudre à pulvériser à 70 % utilise les constituants suivants :

### Exemple PM 2 :

- association n°4 700 g
- dibutylnaphtylsulfonate de sodium 50 g
- produit de condensation en proportions 3/2/1 d'acide naphtalène sulfonique, d'acide phénosulfonique et de formaldéhyde 30 g
- kaolin 100 g
- craie de champagne 120 g

Une autre composition de poudre à pulvériser à 40 % utilise les constituants suivants :

### Exemple PM 3 :

- association n°5 400 g
- lignosulfonate de sodium 50 g
- dibutylnaphtalène sulfonate de sodium 10 g
- silice 540 g

Une autre composition de poudre à pulvériser à 25 % utilise les constituants suivants :

### Exemple PM 4 ::

- association n° 1 250 g
- lignosulfonate de calcium 45 g
- mélange équipondéral de craie de Champagne et d'hydroxyéthylcellulose 19 g
- dibutylnaphtalène sulfonate de sodium 15 g
- silice 195 g
- craie de Champagne 195 g
- kaolin 281 g

Une autre composition de poudre à pulvériser à 25 % utilise les constituants suivants :

### Exemple PM 5 :

- association n°2 250 g
- isoctylphénoxy-polyoxyéthylène-éthanol 25 g
- mélange équipondéral de craie de Champagne et d'hydroxyéthylcellulose 17 g
- aluminosilicate de sodium 543 g
- kieselguhr 165 g

Une autre composition de poudre à pulvériser à 10 % utilise les constituants suivants :

### Exemple PM 6 :

- association n°3 100 g
- mélange de sels de sodium de sulfates d'acides gras saturés 30 g
- produit de condensation d'acide naphtalène sulfonique et de formaldéhyde 50 g
- kaolin 820 g

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les feuilles des végétaux.

A la place des poudres mouillables, on peut réaliser des pâtes. Les conditions et modalités de réalisation et d'utilisation de ces pâtes sont semblables à celles des poudres mouillables ou poudres à pulvériser.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les doses d'emploi dans le cas d'une utilisation comme fongicides des composés selon l'invention peuvent varier dans de larges limites, notamment selon la virulence des champignons et les conditions climatiques.

## Revendications

**1)** Association agrochimique pour la protection des plantes contre les maladies des plantes et les insectes phytophages, caractérisée en ce qu'elle comprend au moins une quantité efficace d'un benzylidène azolylméthylcycloalcane fongicide et au moins une quantité efficace d'imidacloprid insecticide.

**2)**Association agrochimique selon la revendication 1, caractérisée en ce que le benzylidène azolylméthylcycloalcane fongicide est le triticonazole.

**3)** Association selon l'une des revendications 1 et 2, caractérisée en ce que chacune des matières actives est en mélange avec un support inerte et éventuellement au moins un agent tensio-actif.

**4)** Composition agrochimique pour la protection des plantes contre les maladies des plantes et les insectes phytophages, caractérisée en ce qu'elle comprend,en mélange avec un support inerte et éventuellement au moins un agent tensio actif, un benzylidène azolylméthylcycloalcane fongicide et d'imidacloprid insecticide.

**5)** Composition agrochimique selon la revendication 4, caractérisée en ce que le benzylidène azolylméthylcycloalcane fongicide est le triticonazole.

**6)** Procédé de traitement des plantes pour leur protection contre les maladies et les insectes phytophages,caractérisé en ce qu' on applique une quantité efficace d'un benzylidène azolylméthylcycloalcane fongicide et une quantité efficace d'imidacloprid.

**7)** Procédé selon la revendication 6, caractérisé en ce que l'on applique les deux matières actives simultanément.

**8)** Procédé selon la revendication7, caractérisé en ce qu'on applique les deux matières actives successivement, et de manière conjuguée.

**9)** Procédé selon l'une des revendications 6 à 8, caractérisé en ce qu'au moins une des deux matières actives est appliquée en traitement de semences.

**10)** Procédé selon l'une des revendications 6 à9, caractérisé en ce qu' au moins une des deux matières actives est appliquée en traitement de sol.

**11)** Procédé selon l'une des revendications 6 à 10, caractérisé en ce que le triticonazole est appliqué à une dose allant de 2.5 à 250g par quintal de semences.

**12)** Procédé selon l'une des revendications6 à 11, caractérisé en ce que l'imidacloprid est appliqué à une dose allant de 25 à 2000g par quintal de semences.

**13)** Procédé selon l'une des revendications 1 à 12, caractérisé en ce que la plante traitée est une céréale.
